# EUROPÄISCHE PATENTSCHRIFT

(11) **EP 1 016 365 B1**
(45) Veröffentlichungstag und Bekanntmachung des Hinweises auf die Patenterteilung: **09.04.2003**
(21) Anmeldenummer: 98124888.3
(22) Anmeldetag: 31.12.1998
(51) Int. Cl.: A47J 31/44, A47J 31/06

(54) **Kaffeemaschine**
Coffee machine
Machine à café

(43) Veröffentlichungstag der Anmeldung: 05.07.2000
(73) Patentinhaber: WMF WÜRTTEMBERGISCHE METALLWARENFABRIK AG, 73309 Geislingen/Steige (DE)
(72) Erfinder: Huber, Siegfried, 73329 Kuchen (DE); Nagel, Günther, 73072 Donzdorf (DE)
(74) Vertreter: Grünecker, Kinkeldey, Stockmair & Schwanhäusser Anwaltssozietät

(56) Entgegenhaltungen:
- EP-A- 0 324 446
- WO-A-96/10355
- BE-A- 887 805
- DE-U- 9 318 177
- FR-A- 2 634 365
- NL-A- 7 703 422

## Beschreibung

Die Erfindung bezieht sich auf eine Kaffeemaschine der im Oberbegriff der Anspruche 1 und 4 bezeichneten Art sowie auf ein Verfahren zu ihrem Betreiben gemäß dem Oberbegriff von Anspruch 12.

Derartige Kaffeemaschinen sind in großem Umfange bekannt. Ein Beispiel einer derartigen Kaffeemaschine ist in der EP-B1-443 054 beschrieben. Die bekannte Kaffeemaschine enthält eine Brüheinrichtung in Form einer Kolben-Zylinder-Einheit, wobei der Querschnitt des Brühzylinders durch ein am Kolben angeordnetes Brühsieb und die nach oben weisende Stirnseite durch ein Wasserverteilsieb abgeschlossen ist. Das Wasserverteilsieb soll sicherstellen, dass das Wasser den gesamten Querschnitt der Brühkammer gleichmäßig benetzt und ist aus diesem Grund mit einer Vielzahl gleich großer und gleichmäßig über die gesamte Fläche verteilter Durchströmungsöffnungen versehen. Im Betrieb wird das benötigte Kaffeemehl, bei entferntem Verteilsieb, von einer Stelle oberhalb der Brüheinrichtung auf das Brühsieb geschüttet. Im Bestreben, zu vermeiden, dass Kaffeemehl daneben fällt, nimmt man die Ausbildung eines Schüttkegels als unvermeidlich in Kauf. Nach dem Eindosieren des Kaffeemehls wird das Verteilsieb wieder in seine Schließstellung gebracht und mit Wasser beschickt, das sich gleichmäßig oberhalb des Verteilsiebes verteilt und dann über die gesamte Fläche des Verteilsiebes gleichmäßig verteilt auf das Kaffeemehl tropft. Zwar kann sich der Schüttkegel durch aufschwimmendes Kaffeemehl auch etwas ausgleichen, dies geschieht jedoch allenfalls am Ende des Brühvorgangs.

Es ist in der Fachwelt eine bekannte Tatsache, dass für eine optimale Ausnutzung des Kaffeemehls dieses am besten in einer gleichmäßig dicken Schicht vorliegen sollte. Bekannte Möglichkeiten, dies zu erreichen, erfordern jedoch einen so hohen Aulwand, bzw. sind nicht für alle Typen einer Kaffeemaschine geeignet, dass man bisher doch eher die Nachteile des Schüttkegels in Kauf genommen hat, als derartige Konstruktionen einzusetzen. So zeigt beispielsweise die DE-C2-38 29 417 eine Haushaltskaffeemaschine mit obenliegender Filterkammer und einer Art Deckel, an dessen Unterseite Rippen vorstehen. Nach dem Einfüllen des Kaffeemehls wird dieser Deckel aufgesetzt und manuell gedreht, so dass die Rippen das Kaffeemehl planieren.

Bei der Kaffeemaschine nach der DE-A1-33 16 157 sind Wasserverteilsieb und Brühsieb ringförmig angeordnet und der Kolben mit einem nach oben vorstehenden Längsabschnitt versehen, der in einer Kegelspitze endet, mit der die Einfüllöffnung für Kaffeemehl verschlossen werden kann. Soll Kaffeemehl eindosiert werden, so wird der Kolben leicht nach unten gefahren und das Kaffeemehl auf die Kegelspitze des Längsabschnittes dosiert, so dass diese Kegelspitze als Verteileinrichtung für eine angestrebt ringförmige Verteilung des Kaffeemehls wirkt. Diese Konstruktion ist jedoch nicht bei allen Kaffeemaschinen einzusetzen und ist weiterhin nicht in der Lage eine gleichmäßige Schichtdicke in Radialrichtung sicherzustellen.

Zwar ist es bereits bei Haushaltskaffeemaschinen bekannt, Wasser gezielt ungleichmäßig über Kaffeemehl zu leiten, dies geschieht jedoch nicht, um das Kaffeemehl zu einer im Wesentlichen gleichmäßig dicken Schicht einzuplanieren, was bei den verwendeten, trichterartigen Filtern auch nicht möglich wäre.

So zeigt die EP-A-324446 eine Kaffeemaschine mit einem Filtertrichter und einem Wasserverteilkopf, der zwei Kammern aufweist. Die erste Kammer steht über eine einzige Ventilöffnung mit dem zentralen Bereich des Filters in Verbindung, während die zweite Kammer über ein Wasserverteilsieb mit permanent offenen Durchströmöffnungen mit den Randbereichen des Filters in Verbindung steht. Das Wasser wird zunächst in die erste Kammer eingeleitet, wobei durch eine Bimetallsteuerung des Ventils dafür gesorgt ist, dass die mittlere Öffnung zunächst geschlossen ist, so dass das Wasser aus der ersten Kammer über eine Trennwand in die zweite Kammer fließen kann und dort durch die Durchströmöffnungen auf das Kaffeemehl tropft. Die Wasserzufuhr ist so vorbestimmt, dass durch das zunächst auf das Kaffeemehl tropfende Wasser noch kein Getränk erzeugt wird, sondern das Kaffeemehl zunächst nur mit soviel Wasser in Berührung kommt, dass dieses aufgesaugt wird, wodurch das Kaffeemehl aufquillt, was die Ausnutzung des Kaffeemehls und den Geschmack des fertigen Getränks verbessert (sogenannte Prä-Infusion). Erst mit einer gewissen Zeitverzögerung spricht die Bimetallsteuerung an und öffnet das Ventil, so dass nunmehr Wasser in größerer Menge und über die erste Kammer in das Kaffeemehl gelangt und durchläuft.

Die DE-U-931 81 77 beschreibt ein Aromasieb für Kaffeefilter, dass als Wasserverteilsieb ausgebildet ist und für die kegelförmigen Kaffeefilter herkömmlicher Kaffeemaschinen oder Handfilter ausgelegt ist. Das Wasserverteilsieb hat einen zentralen, geschlossenen Bereich, der mit einem Griff versehen ist, und einen mit kleinen Öffnungen versehenen äußeren Bereich, deren Durchmesser so bemessen sein soll, dass das Brühwasser gestaut wird und sich durch diese Stauung bis zum Rand des Filters verteilt und somit gleichmäßig auf die gesamte Oberfläche des Kaffeemehls tropft.

Der Erfindung liegt somit die Aufgabe zugrunde, eine Kaffeemaschine und ein Verfahren zu deren Betrieb bereitzustellen, bei denen es möglich ist, das Kaffeemehl mit konstruktiv einfachsten Mitteln zu einer im wesentlichen gleichmäßig dicken Schicht einzuplanieren.

Die Aufgabe wird durch die Kaffeemaschine der Ansprüche 1 oder 4 und das Verfahren nach Anspruch 12 gelöst.

Durch die erfindungsgemäße Ausgestaltung wird das Kaffeemehl durch ungleichmäßig eingeleitetes Wasser vor bzw. zu Beginn des Brühvorgangs planiert, eine Maßnahme, die universell bei allen Kaffeemaschinen eingesetzt werden kann, da in jede Brüheinrichtung einer Kaffeemaschine Wasser eingeleitet werden muss, und die andererseits konstruktiv äußerst einfach zu bewerkstelligen ist. Je nach dem speziellen Typ und/oder der Position und konstruktiven Ausgestaltung der Kaffeemehl-Eindosierung kann mit der erfindungsgemäßen Einrichtung das Wasser so gezielt auf die Stelle der anfänglich größten Kaffeemehldicke, d.h. die Spitze des Schüttkegels, gerichtet werden, dass dieser einplaniert wird. Ein weiterer großer Vorteil der erfindungsgemäßen Ausgestaltung ergibt sich aus der Tatsache, dass damit das Kaffeemehl auf jeden Fall gleichmäßig verteilt werden kann, egal wie groß oder wie klein die eindosierte Kaffeemehlmenge ist. Bislang war die Bandbreite der Kaffeemengen, die mit einer einzigen Größe einer Brühkammer, d.h. mit ein- und demselben Durchmesser der Auflagefläche, gebrüht werden konnten beschränkt. Es musste sichergestellt werden, dass die eindosierte Kaffeemehlmenge zumindest so groß war, dass ihr Schüttkegel die Auflagefläche, d.h. das Brühsieb, im wesentlichen vollständig bedeckt hat. War die Menge zu klein, lag um den Schüttkegel ein Bereich des Brühsiebes frei, durch den das Wasser direkt durchtreten konnte, was die Qualität des fertigen Kaffeegetränkes stark beeinträchtigte. Bei einer mit der erfindungsgemäßen Planiereinrichtung ausgerüsteten Kaffeemaschine wird hingegen sichergestellt, dass auch eine kleine Menge Kaffeemehl über die gesamte Auflagefläche verteilt werden kann und somit das Brühwasser immer durch Kaffeemehl hindurchgetreten sein muss, bevor es aus der Brüheinrichtung abfließen kann. Es ist deshalb möglich, mit ein- und derselben Brüheinrichtung, wenn sie mit der erfindungsgemäßen Planiereinrichtung ausgestattet ist, eine viel größere Bandbreite der Brühchargengröße abzudecken, ohne dass die Qualität leidet.

Das ungleichmäßige Einleiten des Wassers kann entweder gemäß Anspruch 1 durch zweckmäßige Ausgestaltung der Größe und/oder der Verteilung der Durchströmöffnungen erreicht werden, wobei eine jeweils auf den speziellen Typ der Kaffeemaschine und der Art der Eindosierung des Kaffeemehls abgestimmte, optimale Verteilung des Wassers erzielt werden kann.

Die gewünschte, gezielt ungleichmäßige Verteilung des Wassers kann auch gemäß Anspruch 4 durch mehrere Zufuhrleitungen für das Wasser erreicht werden, wobei die beiden Bereiche des Siebes in einer vorbestimmten Abfolge mit Wasser beliefert werden, so dass sich die gewünschte Strömungsrichtung ergibt.

Vorteilhafte Weiterbildungen der Kaffeemaschinen sind den Unteransprüchen zu entnehmen.

Die Ansprüche 12 und 13 beschreiben ein besonders bevorzugtes Verfahren zum Betreiben einer Kaffeemaschine.

Ausführungsbeispiele der Erfindung werden nachfolgend anhand der Zeichnungen näher erläutert. Es zeigen:
- Fig. 1: eine schematische Darstellung einer Kaffeemaschine nach einem Ausführungsbeispiel der Erfindung,
- Fig. 2: die vergrößerte Darstellung einer Brühkammer der Kaffeemaschine nach Fig. 1 mit einem Schüttkegel aus Kaffeemehl,
- Fig. 3: die Brühkammer nach Fig. 2 nach Einplanierung des Kaffeemehls,
- Fig. 4: die Brühkammer mit einer kleinen Menge Kaffeemehl im Schüttkegel,
- Fig. 5: eine Draufsicht auf das Verteilsieb nach den Fig. 2 bis 4,
- Fig. 6: ein weiteres Ausführungsbeispiel eines Brühkammer,
- Fig. 7: ein weiteres Ausführungsbeispiel eines Verteilsiebes,
- Fig. 8: ein weiteres Ausführungsbeispiel eines Verteilsiebes, und
- Fig. 9: ein weiteres Ausführungsbeispiel eines Verteilsiebes.

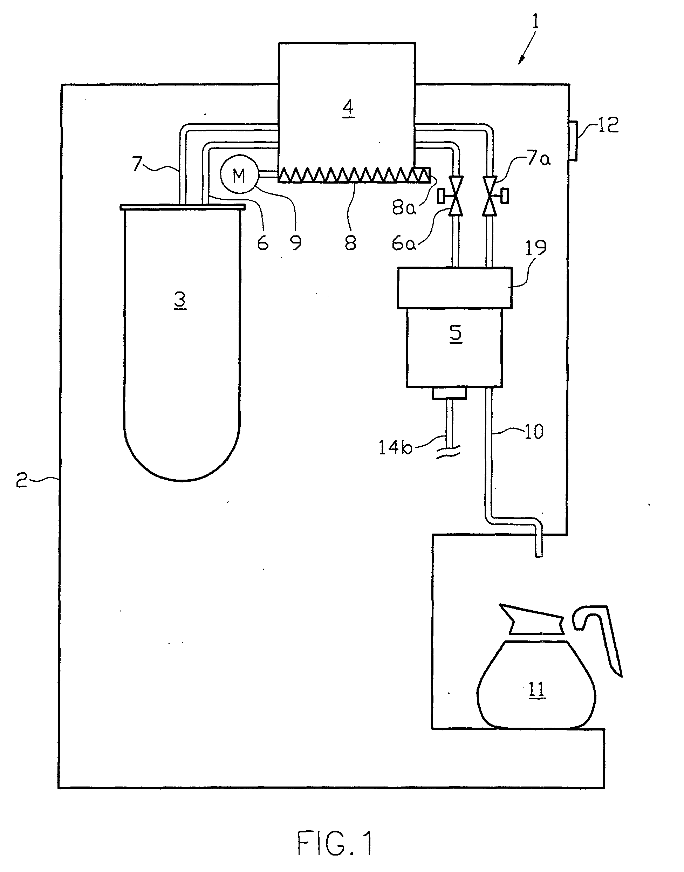

In Fig. 1 sind in schematischer Darstellung die für die nachfolgende Beschreibung wesentlichsten Bauteile einer automatisch arbeitenden Kaffeemaschine 1 ersichtlich. Die Kaffeemaschine 1 weist ein Gehäuse 2 auf, in dem ein Wassererhitzer 3, ein Kaffeerohstoff-Behälter 4 und eine Brüheinrichtung 5 untergebracht sind. Der Wassererhitzer 3 kann entweder ein Boiler oder ein Durchlauferhitzer sein und steht über zwei Leitungen 6 und 7 mit der Brüheinrichtung 5 in Verbindung. In jeder der Leitungen 6, 7 ist jeweils ein Absperrventil 6a und 7a angeordnet, die über eine, bei automatischen Kaffeemaschinen übliche, jedoch nicht gezeichnete, Steuerung betätigbar sind.

Der Kaffeerohstoff-Behälter 4 kann ein Kaffeemehlbehälter oder ein Behälter für Kaffeebohnen mit integriertem Mahlwerk sein. Der Behälter 4 weist eine Kaffeedosiereinrichtung in Form einer üblichen Dosierschnecke 8 auf, die über einen Motor 9 angetrieben wird, der ebenfalls durch die Steuerung gesteuert wird. Der Ausgang 8a der Dosierschnecke 8 befindet sich oberhalb der Brüheinrichtung 5, so daß das durch die Förderschnecke 8 geförderte Kaffeemehl in die Brüheinrichtung 5 hineinfällt. Aus der Brüheinrichtung 5 führt eine Auslaufleitung 10 so aus dem Gehäuse 2 heraus, daß ein untergestelltes Gefäß, dargestellt ist eine Karaffe 11, befüllt werden kann. Statt der Karaffe 11 kann jedoch, zusätzlich oder alternativ, jedes andere, übliche Kaffeegefäß befüllt werden. Am Gehäuse 2 sind weiterhin die üblichen Betätigungseinrichtungen 12 in Form von Tasten, Knöpfen oder Bedienfeldern vorgesehen.

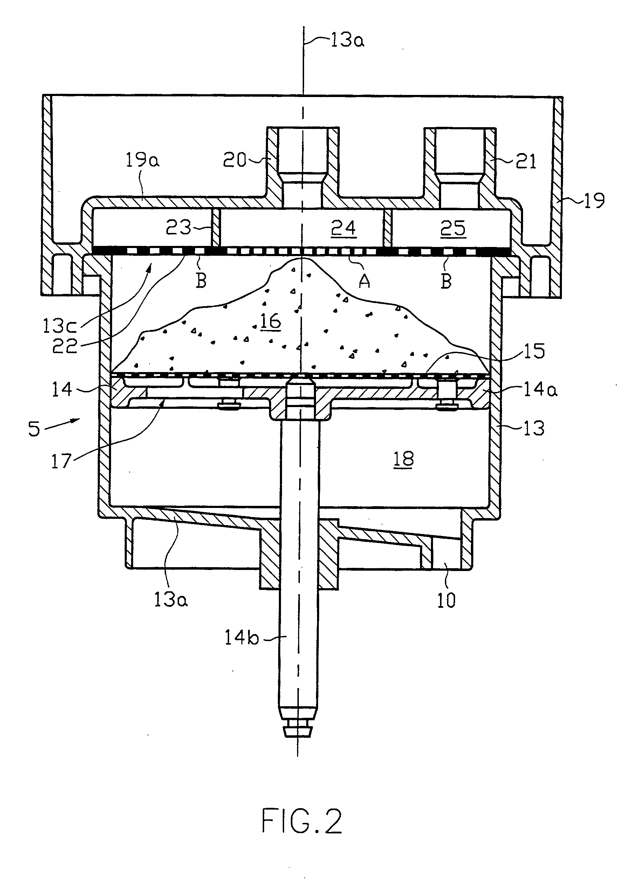

Wie die Fig. 2 bis 4 zeigen, ist die Brüheinrichtung 5 eine Kolbenbrüheinrichtung und enthält ein im wesentlichen kreiszylindrisches Gehäuse 13, das mit senkrecht verlaufender Mittellinie 13a angeordnet ist und einen Kolben 14 beherbergt. Der Kolben 14 enthält einen scheibenförmigen Kolbenkopf 14a und eine Kolbenstange 14b, mit der der Kolbenkopf 14a, angetrieben durch einen nicht gezeichneten Motor, entlang der Mittellinie 13a nach oben und unten verschoben werden kann. Der Kolbenkopf 14a füllt den Querschnitt des Zylindergehäuses 13 im wesentlichen vollständig aus und gleitet abdichtend an der Wandung des Zylindergehäuses 13 entlang. Die von der Kolbenstange 14b wegweisende Oberseite des Kolbenkopfes 14a ist mit einem der üblichen Brühsiebe 15 bedeckt, das eine Auflagefläche für Kaffeemehl 16 bildet. Das Brühsieb 15 liegt hohl auf dem Kolbenkopf 14a auf, wobei der Kolbenkopf 14a die üblichen Sammelräume, und Leitkanäle, die insgesamt mit 17 bezeichnet sind, aufweist, die es gestatten, dass durch das Brühsieb 15 hindurchtretendes Brühgetränk durch den Kolbenkopf 14a hindurchfließt und in einen Raum 18 gelangt, der zwischen dem Kolbenkopf 14a und einem Boden 13a des Zylindergehäuses 13 gebildet ist, und aus dem die Auslaufleitung 10 ausmündet.

An der dem Boden 13a gegenüberliegenden Stirnseite des Zylindergehäuses 13 ist eine Einfüllöffnung 13c vorgesehen, die sich bevorzugt über den gesamten Querschnitt des Zylindergehäuses 13 erstreckt. Diese Öffnung 13c wird durch einen Deckel 19 verschlossen, der aus seiner in den Fig. 2 bis 4 dargestellten Schließposition durch bekannten Mittel in eine Position bewegbar ist, in der er die Einfüllöffnung 13c zum Einfüllen des Kaffeemehls 16 und zum Auswerfen des verbrauchten Kaffeesatzes freigibt.

Der Deckel 19 weist eine Deckwand 19a auf, durch die sich ein erster Anschluss 20 für die Heißwasserleitung 6 und ein zweiter Anschluss 21 für die Heißwasserleitung 7 hindurcherstrecken, wobei zumindest die letzten Längenabschnitte der Heißwasserleitungen 6 und 7 zweckmäßigerweise als Schläuche ausgebildet sind, um die Bewegung des Deckels 19 zu gestatten.

Parallel und im Abstand zur Deckwand 19a und, zumindest in der Schließposition des Deckels 19, parallel zum Brühsieb 15, ist im Deckel 19 ein Wasserverteilsieb 22 angeordnet. Der Zwischenraum zwischen der Deckwand 19a und dem Wasserverteilsieb 22 wird durch eine Trennwand 23 in eine erste Kammer 24 und eine zweite Kammer 25 getrennt. Die erste Kammer 24 wird über den Anschluss 20 von der ersten Heißwasserleitung 6 und die zweite Kammer 25 über den Anschluss 21 von der zweiten Heißwasserleitung 7 versorgt.

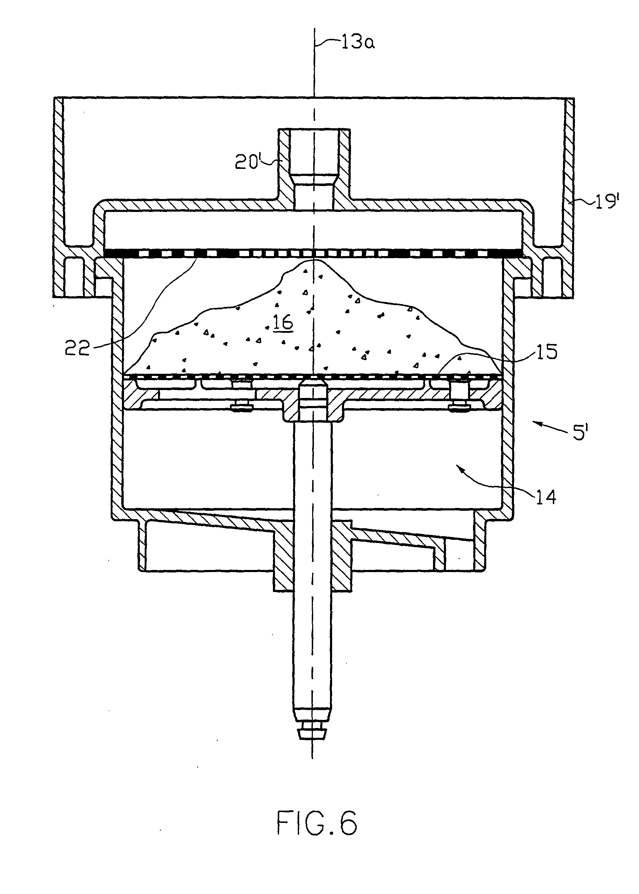

Wie Fig. 5 zeigt, sind am Wasserverteilsieb 22 im wesentlichen zwei Bereiche A und B mit einer unterschiedlichen Verteilung der Sieböffnungen 26 zu erkennen. Der erste Bereich A weist eine Vielzahl gleich großer, relativ eng benachbarter und im wesentlichen gleichmäßig über den gesamten Bereich A verteilter Sieböffnungen 26 auf. Im Bereich B haben die Sieböffnungen 26 den gleichen Durchmesser wie im Bereich A, sind jedoch wesentlich spärlicher und mit ungleichen Abständen, im dargestellten Ausführungsbeispiel entlang von acht Radien, verteilt angeordnet, so daß die offene Siebfläche pro Gesamtfläche im Bereich B wesentlich kleiner ist als im Bereich A wobei die im Bereich A durchtretende Wassermenge etwa 2 - 6 mal, bevorzugt 4 - 5 mal größer ist als die im Bereich B durchtretende Wassermenge. Die Bereich A und B sind durch die Trennwand 23 voneinander getrennt, wobei der Bereich A über die erste Kammer 24 und der Bereich B über die zweite Kammer 25 mit Heißwasser beliefert wird.

Der Bereich A, und damit die erste Kammer 24 sowie die Trennwand 23, ist so angeordnet, daß er bei aufgesetztem Deckel 19 (in der Schließstellung der Fig. 2 bis 4) oberhalb derjenigen Stelle liegt, an der sich bei der verwendeten Dosiereinrichtung die Spitze des Schüttkegels 16 des Kaffeemehls ausbildet. Dies ist im vorliegenden Ausführungsbeispiel der zentrale Abschnitt koaxial zur Mittellinie 13a. Demzufolge ist die Trennwand 23 kreisförmig ausgebildet und umschließt einen kreisförmigen Bereich A, während der Bereich B den Bereich A ringförmig umgibt.

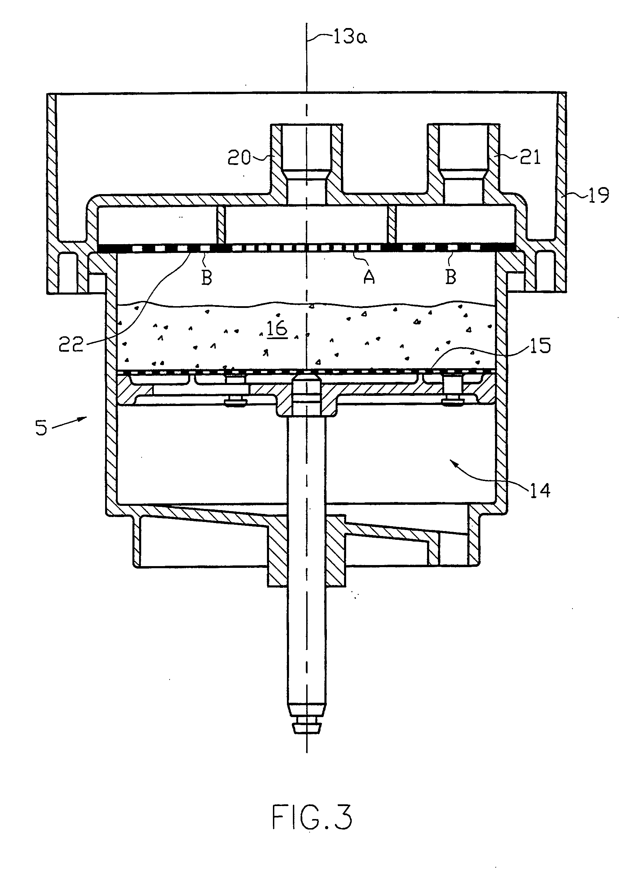

Nachfolgend wird der Betrieb der Kaffeemaschine1 beschrieben. Durch Betätigen an der Betätigungseinrichtung 12 wählt der Benutzer die Art des Kaffeegetränks, beispielsweise herkömmlichen Filterkaffee oder Cafecreme oder Espresso oder dgl. sowie die zu brühende Menge, Tassenportion, Portionskännchen oder Karaffe 11, vor. Wird beispielsweise das Brühen von Filterkaffee in einer Menge, die zum Füllen der Karaffe 11 ausreicht, vorgewählt, so wird der Deckel 19 von der Brüheinrichtung 5 weggeschwenkt, der Kolben 14 in die in Fig. 2 gezeigte Stellung verfahren, der Motor 9 angeschaltet und die Dosierschnecke 8 die vorbestimmte Umdrehungszahl gedreht, um eine vorbestimmte Menge Filterkaffee-Mehl 16 in die Brüheinrichtung 5 zu schütten, so daß sich auf dem Brühsieb 15 der in Fig. 2 gezeigte Schüttkegel ausbildet. Anschließend wird der Deckel 19 geschlossen und der Brüheinrichtung 5 die benötigte Menge heißem Brühwasser in einer Weise zugeführt, daß der Schüttkegel des Kaffeemehls nach Fig. 2 einplaniert wird, so daß anschließend das Kaffeemehl in der in Fig. 3 gezeigten, im wesentlichen gleichmäßig dicken Schicht auf dem Brühsieb 15 liegt. Zu diesem Zweck wird zunächst das Ventil 7a geschlossen und ein erster Schwall Brühwasser allein über die Leitung 6 in die Kammer 24 eingeleitet, wodurch das Brühwasser über den Querschnitt des Brühsiebes 15 ungleichmäßig verteilt, d.h. lokal mittig konzentriert nur auf die Spitze des Schüttkegels auftrifft und das Kaffeemehl seitlich wegspült, so daß es sich gleichmäßig verteilt. Anschließend wird das Ventil 7a geöffnet, wobei die Zeitversetzung zwischen dem Öffnen der beiden Ventile 6a und 7a vorab empirisch ermittelt und entsprechend einprogrammiert werden kann, so daß nunmehr Wasser auf die gesamte Oberfläche der Kaffeemehlschicht aufgebracht werden kann.

Das Einplanieren des Schüttkegels kann auch mit einer Prä-Infusion kombiniert werden, bei der Kaffeemehl vor dem eigentlichen Auslaugprozeß zunächst angefeuchtet wird, was die Ausnutzung des Kaffeemehls verbessert. Zu diesem Zweck wird die vorab und auf die Spitze des Schüttkegels aufgebrachte Wassermenge eher gering bemessen, so daß sie zwar den Schüttkegel einplaniert, jedoch vom Kaffeemehl zunächst aufgesaugt wird. Der anschließende, zweite Wasserschwall durch die geöffneten Ventile 6a und 7a führt dann zur Auslaugung.

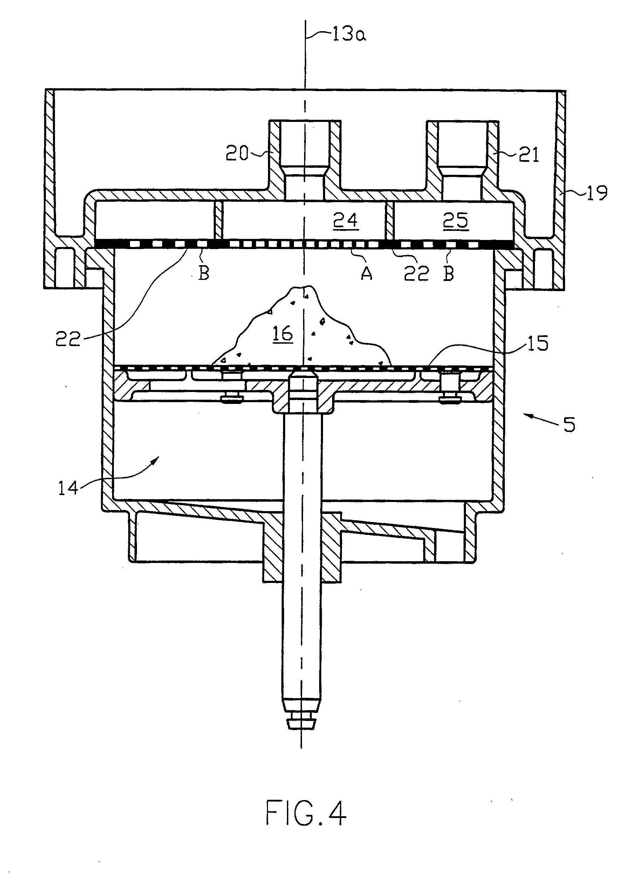

Die Flächengröße der Auflagefläche für Kaffeemehl 16, in diesem Ausführungsbeispiel die Flächengröße des Brühsiebes 15, muß für jede Kaffeemaschine auf die Volumenmenge der zu brühenden Brühcharge abgestimmt werden. Da eine relativ hohe Schichtdicke die Durchlaufzeit des Wassers durch das Kaffeemehl, und somit die Brühzeit, mehr oder weniger stark verlängert, was inbesondere für kommerzielle Kaffeemaschinen ein schwerwiegender Nachteil ist, müßten Brühsiebe für große Brühchargen eine relativ große Auflagefläche für das Kaffeemehl aufweisen, so daß das Kaffeemehl eine akzeptabel dünne Schicht auf dem Brühsieb 15 ausbilden kann. Flächengroße Brühsiebe 15 sind jedoch dann von Nachteil, wenn mit der gleichen Brüheinrichtung kleinere Chargen, beispielsweise Tassenportionen, gebrüht werden sollen. Die dadurch notwendigerweise kleinere Menge Kaffeemehl bedeckt im Schüttkegel, wie Fig. 4 zeigt, das Brühsieb 15 nur teilweise. Würde man jetzt Brühwasser wie üblich eindosieren, so würde ein Großteil des Brühwassers in den Randbereichen des Brühsiebes 15 sofort durchlaufen, ohne vorher mit Kaffeemehl in Berührung gekommen zu sein. Ohne die erfindungsgemäß eröffnete Möglichkeit, das Kaffeemehl vorab einzuplanieren, müßte entweder eine unwirtschaftlich große Menge Kaffeemehl pro Tassenportion eingesetzt werden oder es müßte darauf verzichtet werden, zu stark unterschiedlich große Brühchargen pro Brühvorgang mit der gleichen Brüheinrichtung herstellen zu wollen.

Mit der erfindungsgemäßen Möglichkeit, das Kaffeemehl vorab einzuplanieren, indem man Wasser gezielt unregelmäßig und lokal auf die erwartete Spitze des Schüttkegels konzentriert einleitet, kann die Größe der Brüheinrichtung so gewählt werden, daß ein viel größerer Mengenbereich pro Brühvorgang abgedeckt werden kann. Mit der Ausgestaltung nach den Fig. 1 bis 4, d.h. der Möglichkeit, Wasser den beiden Bereichen des Wasserverteilsiebes gezielt zuleiten zu können, muß die einplanierte Schicht einer geringen Kaffeemehlmenge noch nicht einmal das Brühsieb 15 vollständig bedekken, da beispielsweise bei geringen Kaffeemehlmengen Wasser nur über den zentralen Bereich A zugeleitet werden kann, wodurch das Wasser auf jeden Fall durch Kaffeemehl hindurchgetreten ist, wenn nicht vertikal, so horizontal, auch wenn es durch die unbedeckten Randbereiche des Brühsiebes 15 abfließt.

Die Möglichkeit, auch kleinere Kaffeemehlmengen einzusetzen, ist besonders zweckmäßig, wenn mit der Brüheinrichtung 5 auch Espresso oder Cafecreme gebrüht werden soll. Zum Herstellen dieser Getränke wird der Kolben 14 nach dem Einplanieren des Kaffeemehls 16 durch einen ersten Wasserschwall im Bereich A, der gleichzeitig der Prä-Infusion dient, nach oben verschoben und das Kaffeemehl zwischen dem Brühsieb 15 und dem Wasserverteilsieb 22 gepreßt. Durch die gleichmäßige Schichtdicke des Kaffeemehls wird gleichzeitig eine gleichmäßige Verdichtung des Kaffeemehls erreicht, so daß sich die Brühergebnisse wesentlich verbessern. Das Brühwasser kann dann, je nach erforderlicher Menge, entweder nur über den Bereich A oder über die kombinierten Bereiche A und B eingeleitet werden.

Nach dem Brühvorgang wird der ausgelaugte Kaffeesatz gepreßt, falls dies nicht schon während der Kaffeezubereitung (Espresso) geschehen ist, wobei die gleichmäßige Kaffeemehlschicht auch hierbei von Vorteil ist, da sie ein optimales, gleichmäßiges Auspressen gestattet, so daß sich ein fest zusammenhaltender Filterkuchen bildet, der sich, gegebenenfalls nach einer Trocknung mit Hilfe durchgeblasener Luft oder Dampf, leicht und im wesentlichen vollständig, d.h. ohne Rückstände, aus der Brüh-einrichtung ausstoßen läßt. Das Ausstoßen erfolgt bei abgenommenem Deckel und bis zur Einfüllöffnung 13c hochgeschobenem Kolben 14 durch Wischer oder dgl.

Das erfindungsgemäße Verfahren, einen Kaffeemehl-Schüttkegel durch eine geeignete Wasserleiteinrichtung einzuebnen, kann auch bei Kaffeemaschinen eingesetzt werden, deren Brüheinrichtung nur eine einzige Wasserzuleitung aufweist, wie dies bisher bei Kaffeemaschinen der Fall ist. Eine derartige Brüheinrichtung 5' zeigt Fig. 6, die, bis auf das Fehlen eines zweiten Wasseranschlusses und der ringförmigen Trennwand im Deckel 19', der Brüheinrichtung 5 der Fig. 1 bis 4 entspricht, so daß sie nicht nochmals erläutert werden muß. Der einzige Wasseranschluß, der Wasseranschluß 20', mündet koaxial mit der Mittellinie 13a in den Deckel 19', so daß sich das eingeleitete Wasser über die gesamte Fläche des Wasserverteilsiebes 22 verteilt. Trotzdem wird durch die größere offene Siebfläche des Wasserverteilsiebes 22 im Bereich A, verglichen mit dem Bereich B (s. Fig. 5) der Wasserschwall im Zentrum und auf die Spitze des Schüttkegels des Kaffeemehls 16 konzentriert, wobei der Bereich A wiederum 2 - 6 mal, bevorzugt 4 - 5 mal mehr Wasser pro Zeiteinheit durchläßt als der Bereich B, so daß auch ohne zweiten Wasseranschluß das Kaffeemehl wirksam zu einer im wesentlichen gleichmäßig dicken Schicht einplaniert werden kann. Das Wasserverteilsieb 22 kann in diesem Ausführungsbeispiel die üblichen Wasserverteilsiebe mit gleichmäßiger Verteilung der freien Siebfläche und gleichmäßig großen Durchströmöffungen ersetzen, so daß auf einfache Weise auch schon im Einsatz befindliche Kaffeemaschinen nachgerüstet werden können.

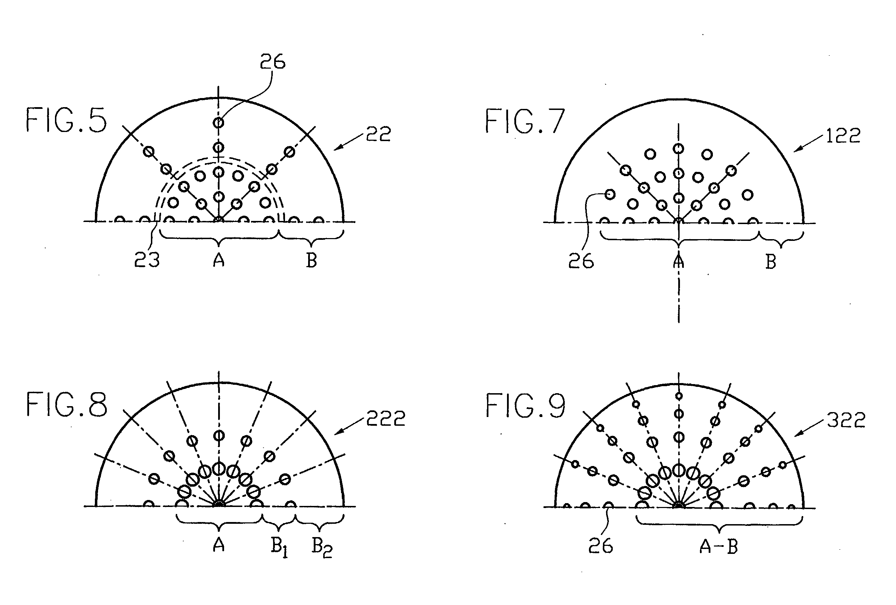

Die Wasserleitwirkung eines erfindungsgemäß ausgebildeten Wasserverteilsiebes kann genau auf den gewünschten Verwendungszweck maßgeschneidert werden. So zeigt Fig. 7 ein abgewandeltes Ausführungsbeispiel eines Verteilsiebes 122, das sich als besonders wirksam erwiesen hat. Bei diesem Verteilsieb ist nur der zentrale Bereich A mit Durchströmöffungen 26 versehen. Die Durchströmöffungen 26 im Bereich A haben den gleichen Durchflußquerschnitt und sind im Bereich A gleichmäßig verteilt, während der den Bereich A ringförmig umgebende Randbereich B keine Durchströmöffungen hat, so daß mit diesem Wasserverteilsieb 122 das Wasser gezielt nur mittig aufgebracht werden kann, wo es den Schüttkegel breitspült.

Eine weitere Ausgestaltung eines erfindungsgemäß ausgebildeten Wasserverteilsiebs 222 zeigt Fig. 8. Das Wasserverteilsieb 222 ist im wesentlichen in drei Bereiche unterteilt, wobei der erste, zentrale Bereich A die größte, offene Siebflache aufweist, diese jedoch durch ungleichmäßig verteilte Durchströmöffnungen 26 gebildet ist, die in Form eines Ringes angeordnet sind, der konzentrisch um eine in der Mittellinie 13a liegende Durchströmöffung liegt. Den Bereich A umgibt ein erster ringförmiger Bereich B₁, der aus einem einzigen Ring von Durchströmöffnungen 26 besteht, deren Anzahl zwar der Anzahl von Durchströmöffnungen im Ring des Bereiches A entspricht, die jedoch wegen des größeren radialen Abstandes des Bereiches B1 zu einer geringeren offenen Siebfläche pro Fläche des Bereiches B1 führen. Den Bereich B1 umgibt ein weiterer, ringförmiger Bereich B2, in dem überhaupt keine Durchströmöffnungen vorgesehen sind.

Fig. 9 zeigt eine weitere Variante eines Wasserverteilsiebes 122, bei dem die Bereiche A und B fließend ineinander übergehen, wobei die Durchströmöffungen 26 wiederum in konzentrischen Ringen mit der gleichen Anzahl an Durchströmöffnungen pro Ring angeordnet sind. Im vorliegenden Ausführungsbeispiel sind jedoch die Durchströmöffnungen unterschiedlich groß, wobei sie im Zentrum am größten sind und stetig in Richtung auf den Rand des Wasserverteilsiebes 322 abnehmen.

Weitere Varianten sind denkbar. So kann durch eine zweckmäßige Formgebung der Durchströmöffnungen und/oder durch eine zweckmäßige Steuerung der Ventile 6a und 7a auch erreicht werden, daß das Wasser mit gezielt unterschiedlichem Druck durch das Wasserverteilsieb hindurchtritt, wobei selbstverständlich der Bereich des höchsten Wasserdruckers dort angeordnet wird, wo die Spitze des Schüttkegels erwartet wird.

Weiterhin kann es bei der Ausgestaltung der Fig. 2 bis 4, d.h. bei zwei unterschiedlich steuerbaren Wasserzuläufen, unter Umständen ausreichen, wenn ein Verteilsieb mit der üblichen, gleichmäßigen Verteilung der Durchströmöffnungen verwendet wird, wobei dann jedoch besonderes Augenmerk auf die Steuerung der beiden Absperrventile 6a und 7a gerichtet werden muß, um die erwünschte, gezielt ungleichmäßige Wassereinleitung sicherzustellen.

Die Erfindung ist weiterhin nicht auf die beschriebenen und gezeichneten Ausführungsbeispiele einer Kaffeemaschine beschränkt. Die erfindungsgemäß verwendeten Maßnahmen zur Wasserleitung sind auch bei Brüheinrichtungen anderer Konstruktionen, beispielsweise Brüheinrichtungen, die ohne Kolben arbeiten, oder Brüheinrichtungen mit ringförmigen oder von der Kreisform abweichenden Brühsieben denkbar. Schließlich kann die erfindungsgemäße Wasserleiteinrichtung mit weiteren Maßnahmen kombiniert werden, die das Einplanieren des Kaffeemehls zusätzlich unterstützen, beispielsweise einer über den Querschnitt der Auflagefläche bewegbaren Einfülleinrichtung für das Kaffeemehl, eine im Dosiersieb für das Kaffeemehl angeordnete Schikane, beispielsweise einen Leitkegel oder dgl., einen bewegbaren Wischer oder einen Schwingungserzeuger bzw. einen Rüttler.

## Patentansprüche

1. Kaffeemaschine mit einer Kaffeedosiereinrichtung (8), einer Brüheinrichtung (5, 5') mit einem im Wesentlichen kreiszylindrischem Gehäuse (13) und einer Auflagefläche (15) zum Aufnehmen von Kaffeemehl, das von der Kaffeedosiereinrichtung (8) in die Brüheinrichtung (5, 5') gefördert wird und einer Einrichtung (3, 6, 7) zum Aufbringen von Wasser auf das Kaffeemehl, **gekennzeichnet durch** eine Planiereinrichtung (22, 24, 25, 122, 222, 322) zum gezielt ungleichmäßigen Leiten des Wassers über das Kaffeemehl (16) derart, dass das Kaffeemehl in einer im Wesentlichen gleichmäßig dicken Schicht auf der Auflagefläche (15) verteilt vorliegt, wobei die Planiereinrichtung ein der Auflageflache (15) gegenüberliegendes Sieb (22,122,222, 322) mit Durchströmöffnungen (26) enthält, die zum Erzeugen einer über das Sieb unterschiedlichen Durchströmung verschieden groß ausgebildet und/oder ungleichmäßig verteilt sind, so dass die **durch** die Summe der Strömungsquerschnitte der Durchströmöffnungen (26) gebildete offene Siebfläche pro Flächeneinheit in einem ersten, zentralen Bereich (A) des Siebes (22,122, 222, 322) größer als in einem zweiten, äußeren Bereich (B) des Siebes ist.

2. Kaffeemaschine nach Anspruch 1, **dadurch gekennzeichnet, dass** die Planiereinrichtung mehrere Zufuhreinrichtungen (24, 25) zum Aufbringen des Wassers in mehreren Strömen auf das Kaffeemehl (16) aufweist.

3. Kaffeemaschine nach Anspruch 2, **dadurch gekennzeichnet, dass** die Planiereinrichtung ein Sieb (22) sowie eine erste und eine zweite Zufuhreinrichtung (24, 25) für Wasser enthält, wobei die erste Zufuhreinrichtung (24) mit einem ersten Bereich (A) des Siebes (22) und die zweite Zufuhreinrichtung (25) mit einem zweiten Bereich (B) des Siebes (22) in Verbindung steht, und dass die Zufuhreinrichtungen (24, 25) mit Absperreinrichtungen (6a, 7a) verbunden sind, die es gestatten, das Wasser wahlweise dem ersten und/oder dem zweiten Bereich (A, B) des Siebes (22) zuzuleiten.

4. Kaffeemaschine mit einer Kaffeedosiereinrichtung (8), einer Brüheinrichtung (5, 5') mit einem im Wesentlichen kreiszylindrischem Gehäuse (13) und einer Auflagefläche (15) zum Aufnehmen von Kaffeemehl, das von der Kaffeedosiereinrichtung (8) in die Brüheinrichtung (5, 5') gefördert wird und einer Einrichtung (3, 6, 7) zum Aufbringen von Wasser auf das Kaffeemehl, **gekennzeichnet durch** eine Planiereinrichtung (22, 24, 25,122, 222, 322) zum gezielt ungleichmäßigen Leiten des Wassers über das Kaffeemehl (16) derart, dass das Kaffeemehl in einer im Wesentlichen gleichmäßig dicken Schicht auf der Auflagefläche (15) verteilt vorliegt, wobei die Planiereinrichtung ein mit Durchströmöffnungen versehenes Sieb (22, 122, 222, 322), sowie eine erste und eine zweite Zufuhreinrichtung (24, 25) für Wasser enthält, wobei die erste Zufuhreinrichtung (24) mit einem ersten, zentralen Bereich (A) des Siebes (22, 122, 222, 322) und die zweite Zufuhreinrichtung (25) mit einem zweiten, äußeren Bereich (B) des Siebes (22, 122, 222, 322) in Verbindung steht, und dass die Zufuhreinrichtung (24, 25) mit Absperreinrichtungen (6a, 7a) verbunden sind, die es gestatten, das Wasser wahlweise dem ersten und/oder dem zweiten Bereich (A, B) des Siebens (22, 122, 222, 322) zuzuleiten.

5. Kaffeemaschine nach Anspruch 4, **dadurch gekennzeichnet, dass** das der Auflagefläche (15) gegenüberliegende Sieb (22, 122, 222, 322) zum Erzeugen einer über das Sieb unterschiedlichen Durchströmung verschieden groß ausgebildete und/oder ungleichmäßig verteilte Durchströmöffnungen (26) enthält.

6. Kaffeemaschine nach Anspruch 5, **dadurch gekennzeichnet, dass** die durch die Summe der Strömungsquerschnitte der Durchströmöffnungen (26) gebildete offene Siebfläche pro Flächeneinheit in einem ersten Bereich (A) des Siebes (22, 122, 222, 322) größer als in einem zweiten Bereich (B) des Siebes ist.

7. Kaffeemaschine nach einem der Ansprüche 1 bis 6, **dadurch gekennzeichnet, dass** durch die Planiereinrichtung die Wasserströmung auf die Mitte der Auflagefläche (15) des Kaffeemehls (16) konzentrierbar ist.

8. Kaffeemaschine nach einem der Ansprüche 1 bis 7, **dadurch gekennzeichnet, dass** durch die Planiereinrichtung (22, 24, 25, 122, 222, 322) Wasser mengenmäßig ungleichmäßig über die Auflagefläche (15) verteilt auf das Kaffeemehl (16) aufbringbar ist.

9. Kaffeemaschine nach einem der Ansprüche 1 bis 8, **dadurch gekennzeichnet, dass** durch die Planiereinrichtung (22, 23, 24, 122, 222, 322) Wasser mit über die Auflageflache (15) unterschiedlichem Druck auf das Kaffeemehl (16) aufbringbar ist.

10. Kaffeemaschine nach einem der Ansprüche 1 bis 9, **dadurch gekennzeichnet, dass** der Durchmesser einer Durchströmöffnung (26) in einem Bereich (A-B) des Siebes (322) größer als der Durchmesser einer Durchströmöffnung (26) im zweiten Bereich (B) des Siebes ist.

11. Kaffeemaschine nach einem der Ansprüche 1 bis 3, **dadurch gekennzeichnet, dass** die Durchströmöffnungen (26) in einem ersten Bereich (A, B) des Siebes (122, 222) konzentriert sind und ein weiterer Bereich (B, B₂) ohne Durchströmöffnungen (26) ist.

12. Verfahren zum Betreiben einer Kaffeemaschine (1), wobei durch eine Kaffeedosiereinrichtung Kaffeemehl (16) unter Ausbildung eines Schüttkegels in eine Brüheinrichtung (5, 5') eingegeben und mit Wasser versetzt wird, **dadurch gekennzeichnet, dass** das Kaffeemehl einplaniert wird, indem das Wasser derart gezielt ungleichmäßig und lokal auf den Schüttkegel konzentriert auf das Kaffeemehl (16) aufgegeben wird, dass das Kaffeemehl sich in einer im Wesentlichen gleichmäßig dicken Schicht verteilt.

13. Verfahren nach Anspruch 12, **dadurch gekennzeichnet, dass** zunächst Wasser zum Verteilen und anfänglichen Benetzen des Kaffeemehls (16) und anschließend die zum Aufbrühen des Kaffeegetränks notwendige Wassermenge eingeleitet wird.

## Claims

1. A coffee machine comprising a coffee metering means (8), a brewing means (5, 5') with a substantially circular cylindrical housing (13) and a support surface (15) for receiving ground coffee fed by the coffee metering means (8) into the brewing means (5, 5'), and a means (3, 6, 7) for applying water to the ground coffee, **characterized by** a leveling means (22, 24, 25, 122, 222, 322) for purposefully guiding the water over the ground coffee (16) in a non-uniform manner such that the ground coffee is distributed over the support surface (15) in a layer having a substantially uniform thickness, the leveling means including a sieve (22, 122, 222, 322) arranged opposite to the support surface (15) and comprising flow openings (26) which have different sizes and/or are distributed in a non-uniform manner for producing a flow varying over the sieve, so that the sieve surface formed by the sum of the flow cross-sections of the flow openings (26) is greater per unit area in a first central area (A) of the sieve (22, 122, 222, 322) than in a second outer area (B) of the sieve.

2. The coffee machine according to claim 1, **characterized in that** the leveling means comprises a plurality of supply means (24, 25) for applying the water in several flows to the ground coffee (16).

3. The coffee machine according to claim 2, **characterized in that** the leveling means includes a sieve (22) as well as a first and a second supply means (24, 25) for water, said first supply means (24) communicating with a first area (A) of the sieve (22) and the second supply means (25) communicating with a second area (B) of the sieve (22), and that the supply means (24, 25) are connected to shut-off means (6a, 7a) which permit the selective supply of water to the first and/or the second area (A, B) of the sieve (22).

4. A coffee machine comprising a coffee metering means (8), a brewing means (5, 5') with a substantially circular cylindrical housing (13) and a support surface (15) for receiving ground coffee fed by the coffee metering means (8) into the brewing means (5, 5'), and a means (3, 6, 7) for applying water to the ground coffee, **characterized by** a leveling means (22, 24, 25, 122, 222, 322) for purposefully guiding the water over the ground coffee (16) in a non-uniform manner such that the ground coffee is distributed over the support surface (15) in a layer having a substantially uniform thickness, the leveling means including a sieve (22, 122, 222, 322) provided with flow openings, as well as a first and a second supply means (24, 25) for water, said first supply means (24) communicating with a first central area (A) of the sieve (22, 122, 222, 322) and the second supply means (25) communicating with a second outer area (B) of the sieve (22, 122, 222, 322), and that the supply means (24, 25) are connected to shut-off means (6a, 7a) which permit the selective supply of water to the first and/or the second area (A, B) of the sieve (22, 122, 222, 322).

5. The coffee machine according to claim 4, **characterized in that** the sieve (22, 122, 222, 322) opposite to the support surface (15) includes flow openings (26) which have different sizes and/or are distributed in a non-uniform manner so as to produce a flow varying over the sieve.

6. The coffee machine according to claim 5, **characterized in that** the open sieve surface formed by the sum of the flow cross-sections of the flow openings (26) is greater per unit area in a first area (A) of the sieve (22, 122, 222, 322) than in a second area (B) of the sieve.

7. The coffee machine according to any one of claims 1 to 6, **characterized in that** the flow of water can be concentrated by the leveling means onto the center of the support surface (15) of the ground coffee (16).

8. The coffee machine according to any one of claims 1 to 7, **characterized in that** water can be applied by the leveling means (22, 24, 25, 122, 222, 322) to the ground coffee (16) in quantities distributed in a non-uniform manner over the support surface (15).

9. The coffee machine according to any one of claims 1 to 8, **characterized in that** water can be applied by the leveling means (22, 23, 24, 122, 222, 322) to the ground coffee (16) at a pressure differing across the support surface (15).

10. The coffee machine according to any one of claims 1 to 9, **characterized in that** the diameter of a flow opening (26) in an area (A-B) of the sieve (322) is greater than the diameter of a flow opening (26) in the second area (B) of the sieve.

11. The coffee machine according to any one of claims 1 to 3, **characterized in that** the flow openings (26) in a first area (A, B) of the sieve (122, 222) are concentrated and a further area (B, B₂) is without any flow openings (26).

12. A method for operating a coffee machine (1), with ground coffee (16) being introduced into a brewing means (5, 5') by a coffee metering means under formation of a heaped cone and soaked with water, **characterized in that** the ground coffee is leveled off by the water being applied to the ground coffee (16) in such a purposefully non-uniform manner and locally concentrated on the heaped cone that the ground coffee is distributed in a layer having a substantially uniform thickness.

13. The method according to claim 12, **characterized in that** water is first introduced for distributing and initially wetting the ground coffee (16) and the amount of water required for brewing the coffee beverage is subsequently introduced.

## Revendications

1. Machine à café avec un dispositif de dosage de café (8), un dispositif échaudeur (5,5') avec un carter (13) de forme sensiblement cylindrique à section circulaire et une face de pose (15) pour supporter la farine de café, farine transportée du dispositif de dosage de café (8) dans le dispositif échaudeur (5,5'), et un dispositif (3,6,7) pour appliquer de l'eau sur la farine de café, **caractérisée par** un dispositif d'aplanissement (22,24,25,122,222,322), pour diriger de façon irrégulière, à dessein, l'eau sur la farine de café (16) de manière que la farine de café se présente de façon répartie en une couche épaisse pratiquement régulière sur la face de pose (15), le dispositif d'aplanissement contenant un tamis (22,122,222,322) opposé à la face de pose (15), tamis présentant des ouvertures de passage (26) de tailles différentes et/ou réparties de façon irrégulière pour produire un écoulement traversant d'intensité différente au passage du tamis, de sorte que la face de tamisage ouverte formée par la somme des aires de section transversale offerte à l'écoulement par les ouvertures de passage (26), par unité de surface, est supérieure dans une première zone (A) centrale du tamis (22,122,222,322) à celle d'une deuxième zone (B) extérieure du tamis.

2. Machine à café selon la revendication 1, **caractérisée en ce que** le dispositif d'aplanissement présente plusieurs dispositifs d'alimentation (24,25) pour appliquer de l'eau en plusieurs flux sur la farine de café (16).

3. Machine à café selon la revendication 2, **caractérisée en ce que** le dispositif d'aplanissement contient un tamis (22) ainsi qu'un premier et un deuxième dispositifs d'alimentation (24,25) pour l'eau, le premier dispositif d'alimentation (24) étant relié à une première zone (A) du tamis (22) et le deuxième dispositif d'alimentation (25) étant relié à une deuxième zone (B) du tamis (22), et **en ce que** les dispositifs d'alimentation (24,25) sont reliés à des dispositifs d'isolement (6a,7a) permettant de diriger l'eau à volonté vers la première et/ou la deuxième zone (A,B) du tamis (22).

4. Machine à café muni d'un dispositif de dosage de café (8), d'un dispositif échaudeur (5,5') avec un carter (13) à forme sensiblement cylindrique à section circulaire et une face de pose (15) pour supporter de la farine de café, farine transportée du dispositif de dosage de café (8) dans le dispositif échaudeur (5,5'), et un dispositif (3,6,7) pour application d'eau sur la farine de café, **caractérisée par** un dispositif d'aplanissement (22,24,25,122,222,322) pour diriger de façon irrégulière, à dessein, l'eau sur la farine de café (16) de manière que la farine de café se présente de façon répartie en une couche épaisse sensiblement régulière sur la face de pose (15), le dispositif d'aplanissement contenant un tamis (22,122,222,322) muni d'ouvertures de passage d'écoulement, ainsi qu'un premier et un deuxième dispositifs d'alimentation (24,25) pour de l'eau, le premier dispositif d'alimentation (24) étant relié à une première zone centrale (A) du tamis (22,122,222,322) et le deuxième dispositif d'alimentation (25) étant relié à une deuxième zone (B) extérieure du tamis (22,122,222,322), et en ce que les dispositifs d'alimentation (24,25) sont reliés à des dispositifs de fermeture (6a,7a) permettant d'amener l'eau, au choix, à la première et/ou à la deuxième zone (A,B) du tamis (22,122,222,322).

5. Machine à café selon la revendication 4, **caractérisée en ce que** le tamis (22,122,222,322) opposé à la face de pose (15) contient des ouvertures de passage d'écoulement (26) de taille différente et/ou réparties de façon irrégulière, pour produire un écoulement traversant, d'intensité différente au passage du tamis.

6. Machine à café selon la revendication 5, **caractérisée en ce que** la face de tamis ouverte formée par la somme des aires de sections transversales offertes à l'écoulement par les ouvertures de passage (26), par unité de surface, est supérieure dans une première zone (A) du tamis (22,122,222,322) à celle qu'on a dans une deuxième zone (B) du tamis.

7. Machine à café selon l'une des revendications 1 à 6, **caractérisée en ce que**, au moyen du dispositif d'aplanissement, l'écoulement d'eau peut être concentré sur le centre de la surface de pose (15) de la farine de café (16).

8. Machine à café selon l'une des revendications 1 à 7, **caractérisée en ce qu'**au moyen du dispositif d'aplanissement (22,24,25,122,222,322), l'eau peut être appliquée sur la farine de café (16) en étant répartie de façon irrégulière sur la surface de pose (15).

9. Machine à café selon l'une des revendications 1 à 8, **caractérisée en ce que**, au moyen du dispositif d'aplanissement (22,23,24,122,222,322), l'eau peut être appliquée sur la farine de café (16) à une pression différente sur l'étendue de la surface de pose (15).

10. Machine à café selon l'une des revendications 1 à 9, **caractérisée en ce que** le diamètre d'une ouverture de passage d'écoulement (26) dans une zone (A-B) du tamis (322) est supérieur au diamètre d'une ouverture de passage d'écoulement (26) se trouvant dans une deuxième zone (B) du tamis.

11. Machine à café selon l'une des revendications 1 à 3, **caractérisée en ce que** les ouvertures de passage d'écoulement (26) sont concentrées dans une première zone (A,B) du tamis (122,222) et une autre zone (B,B₂) ne comporte pas d'ouvertures de passage d'écoulement (26).

12. Procédé de fonctionnement d'une machine à café (1), dans lequel, au moyen d'un dispositif de dosage de café, de la farine de café (16) est introduite dans un dispositif d'échaudage (5,5') en formant un cône de masse en vrac et est mouillée avec de l'eau, **caractérisée en ce que** la farine de café est aplanie par le fait que l'eau est fournie à dessein de façon irrégulière et localement concentrée sur le cône de masse en vrac sur la farine de café (16), de façon que la farine de café se répartisse en une couche épaisse sensiblement régulière.

13. Procédé selon la revendication 12, **caractérisé en ce que**, d'abord, on introduit de l'eau pour répartir et, initialement, mouiller la farine de café (16) et, ensuite, on introduit la quantité d'eau nécessaire pour l'échaudage de la boisson à base de café.
